# EUROPÄISCHE PATENTANMELDUNG

(11) **EP 1 484 783 A2**
(43) Veröffentlichungstag der Anmeldung: **08.12.2004**
(21) Anmeldenummer: 04009455.9
(22) Anmeldetag: 21.04.2004
(51) Int. Cl.: H01J 61/48, H01J 61/44

(54) **Entladungslampe mit zwei Leuchtstoffschichten**

(30) Priorität: 02.06.2003 DE 10324832
(71) Anmelder: Patent-Treuhand-Gesellschaft für elektrische Glühlampen mbH, 81543 München (DE)
(72) Erfinder: Huber, Günter, 86529 Schrobenhausen (DE); Jermann, Frank, Dr., 81739 München (DE); Müller, Ulrich, 81479 München (DE); Zachau, Martin, Dr., 82269 Geltendorf (DE)

(57) **Zusammenfassung**

Eine Entladungslampe mit einem Entladungsgefäß (2), das ein Entladungsmedium umschließt, das im Betrieb der Lampe elektromagnetische Strahlung im VUV-Bereich emittiert, weist auf der Innenseite der Entladungsgefäßwand eine dem Entladungsmedium zugewandte erste Leuchtstoffschicht (5) auf, die eine durch die VUV-Strahlung anregbare und für die Emission von elektromagnetischer Strahlung im UVA-Bereich vorgesehene UVA-Komponente umfasst. Außerdem weist die Entladungslampe eine zweite Leuchtstoffschicht (4) auf, die durch die UVA-Strahlung anregbar und für die Emission von elektromagnetischer Strahlung im sichtbaren Bereich vorgesehen ist. Diese zweite Leuchtstoffschicht (4) liegt entweder unter der ersten Leuchtstoffschicht (5), oder ist auf der Außenseite der Entladungsgefäßwand (2) aufgebracht. Gegenüber einer herkömmlichen, direkt mit VUV-Strahlung angeregten Leuchtstoffmischung wird dadurch eine geringere Farbortverschiebung erzielt.

## Beschreibung

### Technisches Gebiet

Die Erfindung geht aus von einer Entladungslampe mit Leuchtstoff, bei der im Betrieb von einem innerhalb des Entladungsgefäßes der Entladungslampe enthaltenen Entladungsmedium elektromagnetische Strahlung überwiegend im VUV-Bereich emittiert wird. Als VUV-Bereich werden hier Wellenlängen unterhalb ca. 200 nm verstanden, insbesondere im Bereich von ca. 100 nm bis 200 nm. Die VUV-Strahlung wird mit Hilfe des Leuchtstoffes in Strahlung mit längeren Wellenlängen konvertiert, beispielsweise in den sichtbaren Spektralbereich.

Insbesondere betrifft die Erfindung auch Entladungslampen der vorgenannten Art, die außerdem für den Betrieb mittels dielektrisch behinderter Entladung ausgelegt sind, sogenannte dielektrische Barriere-Entladungslampen. Solche Entladungslampen sind an sich Stand der Technik und bereits in den verschiedensten Einzelheiten in früheren Patentanmeldungen derselben Anmelderin dargestellt worden. Auf die grundlegenden physikalischen und technischen Details solcher Entladungslampen wird hier nicht mehr im Einzelnen eingegangen, sondern stattdessen auf den einschlägigen Stand der Technik verwiesen, in dem diese Lampen auch gelegentlich als stille Entladungslampen bezeichnet werden. Sie eignen sich insbesondere auch für eine gepulste Betriebsweise, bei der sich eine besonders gute Effizienz der Strahlungserzeugung ergibt. Diese Lampen sind typischerweise mit Edelgas, vorzugsweise Xenon, bzw. Edelgasmischungen gefüllt. Während des Lampenbetriebs entstehen innerhalb des Entladungsgefäßes insbesondere Excimere, beispielsweise Xe₂*, die eine Molekülbandenstrahlung mit einem Maximum bei ca. 172 nm emittieren.

Für Anwendungen, die weißes Licht voraussetzen, beispielsweise für die Allgemeinbeleuchtung, Farbscanner, die Hinterleuchtung von Farb-Flüssigkristallbildschirmen u.ä., wird die VUV-Strahlung mittels geeigneter Weißlicht-Leuchtstoffmischungen konvertiert. Je nach Anforderung an die Farbwiedergabeeigenschaften der Lampe kommen hierfür Zweibanden-Leuchtstoffmischungen, z.B. eine bau und eine gelb emittierende Leuchtstoffkomponente, oder Dreibanden-Leuchtstoffmischungen, z.B. eine rot, grün und blau emittierende Leuchtstoffkomponente in Betracht. Problematisch ist allerdings, dass insbesondere die üblicherweise verwendeten Blau-Leuchtstoffkomponenten im Verlaufe der Lampenlebensdauer durch die VUV-Strahlung geschädigt werden und dadurch an Leuchtkraft verlieren. Dadurch verändert sich die Leuchtkraft der einzelnen Leuchtstoffkomponenten einer Leuchtstoffmischung unterschiedlich und es resultiert eine zunehmende Farbortverschiebung. Hinzu kommt, dass die bekannten Rot-Leuchtstoffkomponenten eine relative schlechte Quanteneffizienz bei Anregung mit VUV-Strahlung haben.

### Stand der Technik

Die Patentschrift US-A 5 714 835 zeigt eine dielektrische Barriere-Entladungslampe mit einer Weißlicht-Leuchtstoffmischung. Die Komponenten dieser Weißlicht-Leuchtstoffmischung sind die Rot-Leuchtstoffkomponente (Y_{0,72}Gd_{0,2}Eu_{0,08})BO₃, die Grün-Leuchtstoffkomponente (La_{0,43}Ce_{0,39}Tb_{0,18})PO₄ und die Blau-Leuchtstoffkomponente (Ba_{0,94}Eu_{0,06})MgAl₁₀O₁₇. Als Entladungsmedium befindet sich im Innern der Lampe das Edelgas Xenon. Während des Lampenbetriebs emittiert das Entladungsmedium Strahlung mit Wellenlängen kürzer als 200 nm, die von der Weißlicht-Leuchtstoffmischung in weißes Licht konvertiert wird.

### Darstellung der Erfindung

Die Aufgabe der vorliegenden Erfindung ist es, die eingangs erwähnten Probleme zu beseitigen und eine mit einem im Betrieb VUV-Strahlung emittierenden Entladungsmedium gefüllte Entladungslampe mit Leuchtstoff anzugeben, die ein verbessertes Langzeitverhalten hinsichtlich ihrer lichttechnischen Eigenschaften zeigt. Ein spezieller Aspekt der Aufgabe ist, dass die Lampe während ihrer Lebensdauer eine geringere Farbortverschiebung aufweist.

Diese Aufgabe wird gelöst durch eine Entladungslampe mit einem Entladungsgefäß, einem Entladungsmedium, das sich im Innem des Entladungsgefäßes befindet und im Betrieb der Lampe elektromagnetische Strahlung im VUV-Bereich emittiert, einem Leuchtstoff, der auf der Wand des Entladungsgefäßes aufgebracht ist, wobei der Leuchtstoff mindestens eine Leuchtstoffkomponente umfasst, dadurch gekennzeichnet, dass der Leuchtstoff eine erste Leuchtstoffschicht umfasst, die auf der Innenseite der Wand des Entladungsgefäßes aufgebracht ist und eine durch die VUV-Strahlung anregbare und für die Emission von elektromagnetischer Strahlung im UVA-Bereich vorgesehene UVA-Komponente umfasst, der Leuchtstoff eine zweite Leuchtstoffschicht umfasst, die durch die UVA-Strahlung anregbar und für die Emission von elektromagnetischer Strahlung im sichtbaren Bereich vorgesehen ist, wobei die Reihenfolge der Leuchtstoffschichten so ist, dass vom Entladungsmedium aus betrachtet zuerst die erste Leuchtstoffschicht und danach die zweite Leuchtstoffschicht kommt.

Dabei kann die zweite Leuchtstoffschicht entweder ebenfalls auf der Innenseite der Wand des Entladungsgefäßes aufgebracht sein und zwar unterhalb der ersten Leuchtstoffschicht, oder die zweite Leuchtstoffschicht ist auf der Außenseite der Wand des Entladungsgefäßes aufgebracht. Ersteres hat den Vorteil, dass der Leuchtstoff vollständig innerhalb des Entladungsgefäßes und damit vor äußeren Einflüssen geschützt ist. Die Alternative hat den Vorteil einer einfachen Lampenfertigung, da Lampen verschiedener Lichtfarben einfach durch nachträgliches Aufbringen der die sichtbare Strahlung erzeugenden Leuchtstoffschicht auf die Außenseite des Entladungsgefäßes der ansonsten fertigen "UVA-Lampe" erfolgen kann.

Weitere besonders vorteilhafte Ausgestaltungen finden sich in den abhängigen Ansprüchen.

Für die Erzeugung von weißem Licht besteht die zweite Leuchtstoffschicht typischerweise entweder aus zwei Leuchtstoffkomponenten, nämlich einer blau und einer gelb oder orange emittierenden Leuchtstoffkomponente, oder aus drei Leuchtstoffkomponenten, nämlich je einer rot, grün und bau emittierenden Leuchtstoffkomponente. Hinsichtlich der Gleichmäßigkeit der Leuchtstoffbeschichtung und um die Anzahl der benötigten Fertigungsschritte möglichst gering zu halten ist es zwar an sich vorteilhaft, die zwei bzw. drei Leuchtstoffkomponenten als Leuchtstoffmischung in einer einzigen Leuchtstoffschicht aufzubringen. Allerdings ist es prinzipiell auch denkbar jede Leuchtstoffkomponente als separate Leuchtstoffschicht aufzubringen.

Obwohl die Erfindung insbesondere für auf weißes Licht abgestimmte Entladungslampen geeignet ist, ist sie jedoch nicht darauf beschränkt, sondern umfasst auch Entladungslampen, die farbiges Licht abstrahlen.

Jedenfalls werden durch die vorgenannte Lösung gleich zwei Vorteile erzielt. Zum einen werden VUV-empfindliche Leuchtstoffkomponenten, wie insbesondere blaue Leuchtstoffkomponenten, z.B. BaMgAl₁₀O₁₇:Eu, nur noch von der durch die darüber liegende erste Leuchtstoffschicht emittierten UVA-Strahlung angeregt. Dadurch wird die eingangs erwähnte, mit der VUV-Bestrahlung einhergehende Verminderung der Leuchtkraft dieser VUVempfindlichen Leuchtstoffe und die daraus bei Leuchtstoffmischungen resultierende Farbortverschiebung vermieden. Zum anderen werden vorzugsweise auch die Rot-Leuchtstoffkomponenten mit UVA-Strahlung angeregt, was wesentlich effizienter ist als mit VUV-Strahlung. Grün-Leuchtstoffkomponenten sind in dieser Hinsicht wesentlich unkritischer, d.h. relativ stabil bei VUV-Bestrahlung und effizient mit VUV-Strahlung anregbar. Deshalb müssen sie im Unterschied zu Blau-Leuchtstoffkomponenten nicht notwendigerweise ausschließlich in der zweiten Leuchtstoffschicht sein, sondern können auch in der ersten Leuchtstoffschicht mit der UVA-Komponente gemischt sein. In diesem Fall wird die Grün-Leuchtstoffkomponente überwiegend direkt von der VUV-Strahlung angeregt, wohingegen die Leuchtstoffkomponenten in der zweiten Leuchtstoffschicht überwiegend von der UVA-Strahlung der UVA-Komponente der ersten Leuchtstoffschicht angeregt werden und außerdem keiner oder allenfalls einer deutlich verminderten VUV-Bestrahlung ausgesetzt sind. Folglich verringert sich die Leuchtkraft der einzelnen Leuchtstoffkomponenten wesentlich gleichmäßiger und folglich ist die Farbortverschiebung ebenfalls geringer als bei herkömmlichen, direkt durch VUV-Strahlung angeregten Leuchtstoffmischungen. Die Rot-Leuchtstoffkomponente kann zwar im Prinzip ebenfalls in der ersten Leuchtstoffschicht mit der UVA-Komponente gemischt sein. Allerdings ist für die Rot-Leuchtstoffkomponente - wie bereits weiter oben erwähnt - aufgrund der besseren Anregbarkeit mit UVA-Strahlung vorzugsweise die zweite Leuchtstoffschicht vorgesehen.

Als UVA-Komponente besonders geeignet haben sich erwiesen:
A) Ce_{a-c}Ln_{b}R_{c}Mg_{d}Al₁₁O_{16,5+1,5(a+b)-0,5c+d},
   wobei
   Ln = La, Y, Gd,
   R = Ba, Ca, Sr
   und
   0,10 ≤ a ≤ 1,00;
   0 ≤ b ≤ 0,9;
   0 ≤ c ≤ 0,5a;
   0,45 ≤ d ≤ 2,00;
   a+b ≤ 1;
B) Ln₁₋ₓCeₓPO₄,
   wobei
   Ln = La, Y, Gd oder Mischungen daraus,
   und
   0,01 ≤ x ≤ 0,30
   bevorzugt
   0,02 ≤ x ≤ 0,10;
C) Ln₁₋ₓCeₓBO₃ ,
   wobei
   Ln = La, Y, Gd oder Mischungen daraus,
   und
   0,01 ≤ x ≤ 0,20
   bevorzugt
   0,02 ≤ x ≤ 0,10.

Ebenfalls geeignet als UVA- Komponente, wenn auch weniger gut, sind:
D) La_{1-x-y}GdₓBi_{y}B₃O₆
   mit 0,37 ≤ x ≤ 0,80 und 0,01 ≤ y ≤ 0,03
E) Gd₁₋ₓPrₓMgB₅O₁₀
   mit 0,01 ≤ x ≤ 0,05
F) Ln₁₋ₓPrₓSiO₅
   mit Ln = Y, Gd oder Mischungen daraus,
   wobei 0,01 ≤ x ≤ 0,05
G) Gd₁₋ₓCeₓMgB₅O₁₀
   mit 0,02 ≤ x ≤ 0,30
H) BaLa₁₋ₓCeₓB₉O₁₆
   mit 0,02 ≤ x ≤ 0,30
J) Ba₁₋ₓPbₓSi₂O₅
   mit 0,02 ≤ x ≤ 0,05.

Für die die sichtbare Strahlung erzeugende(n) Leuchtstoffschicht(en) eignen sich prinzipiell alle bekannten langweilig anregbaren Leuchtstoffe. Im Einzelnen eignen sich insbesondere die nachfolgend aufgeführten Leuchtstoffe.

Als Grün-Leuchtstoffkomponente, die sowohl in der ersten Leuchtstoffschicht mit der UVA-Komponente gemischt als auch in der zweiten oder einer weiteren Leuchtstoffschicht verwendet werden kann, eignen sich beispielsweise:
K) LnBO₃:Ce,Tb,
   wobei Ln = La, Y, Gd oder Mischungen daraus;
L) Ln₂SiO₅:Ce,Tb,
   wobei Ln = La, Y, Gd oder Mischungen daraus, sowie
M) SrSi₂O₂N₂:Eu .

Als Blau- bzw. Blau-grün-Leuchtstoffkomponente für die zweite oder eine weitere Leuchtstoffschicht eignen sich beispielsweise:
N) Sr₅(PO₄)₃Cl:Eu bzw. Sr₅(PO₄)₃Cl:Eu,Mn;
O) BaMgAl₁₀O₁₆:Eu bzw. BaMgAl₁₀O₁₆:Eu,Mn;
P) SrMgAl₁₀O₁₆:Eu bzw. SrMgAl₁₀O₁₆:Eu,Mn;
Q) Sr₄Al₁₄O₂₅:Eu bzw. Sr₄Al₁₄O₂₅:Eu,Mn.

Als Rot-Leuchtstoffkomponente, bevorzugt für die zweite oder eine weitere Leuchtstoffschicht, eignen sich beispielsweise:
R) Ln₂O₂S₂:Eu,
   wobei Ln = La, Y, Gd oder Mischungen daraus;
S) R₂Si₅N₈:Eu,
   wobei R = Ba, Ca, Sr.

Als Gelbleuchtstoffkomponente, insbesondere in Kombination mit einem der unter N - Q genannten Blauleuchtstoffkomponenten, eignen sich beispielsweise:
T) YAG:Ce , einschließlich dem Fachmann an sich bekannte Varianten;
U) CaSi₂O₂N₂:Eu²⁺;
V) Sr₂Si₅N₈:Ce³⁺.

Geringe Variationen der stöchiometrischen Zusammensetzungen der oben aufgeführten Leuchtstoffkomponenten sind üblich und deshalb von den obigen Darstellungen mit umfasst.

### Kurze Beschreibung der Zeichnungen

Im Folgenden soll die Erfindung anhand eines Ausführungsbeispiels näher erläutert werden. Die Figuren zeigen:

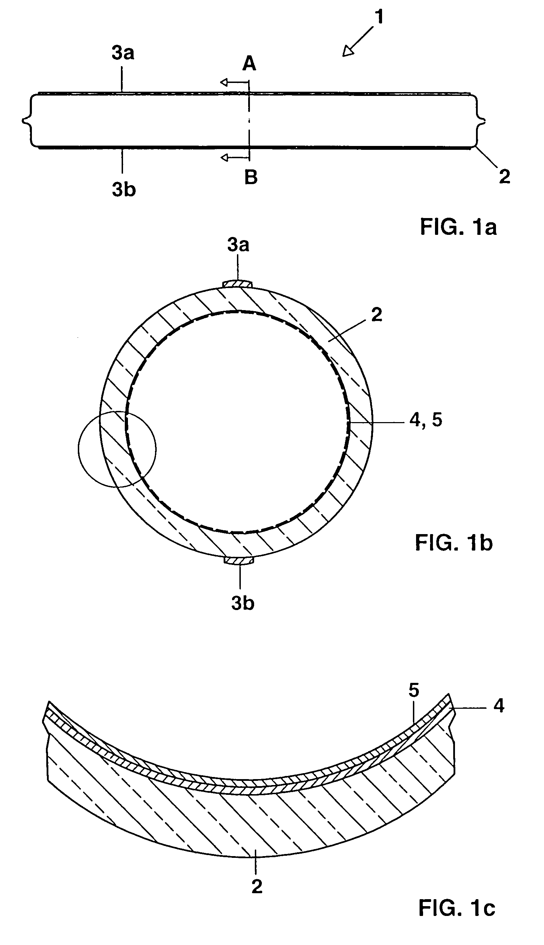

- Fig. 1a: eine dielektrische Barriere-Entladungslampe in Seitenansicht,
- Fig. 1b: einen Querschnitt der Lampe aus Fig. 1a entlang der Linie AB,
- Fig. 1c: eine Ausschnittsvergrößerung des Querschnitts aus Fig. 1b.

### Bevorzugte Ausführung der Erfindung

Bei der nachfolgenden Erläuterung eines Ausführungsbeispiels der Erfindung wird Bezug auf die Figuren 1a - 1c genommen.

Die Entladungslampe 1 weist ein rohrförmiges beidseitig verschlossenes Entladungsgefäß 2 mit einem Außendurchmesser von ca. 10 mm auf. Das Entladungsgefäß 2 besteht aus Natronkalkglas und ist mit Xenon mit einem Druck von ca. 15 kPa als Entladungsmedium gefüllt. Auf der Außenseite der Wand des Entladungsgefäßes 2 sind zwei als linienförmige Leiterbahnen ausgebildete metallische Elektroden 3a, 3b diametral zueinander und parallel zur Längsachse des Entladungsgefäßes aufgebracht. Auf der Innenseite der Wand des Entladungsgefäßes 2 sind eine "innere" Leuchtstoffschicht 4 und eine "äußere" Leuchtstoffschicht 5 aufgebracht. Die "äußere", bezüglich des Entladungsmediums erste Leuchtstoffschicht 5 besteht aus der UVA-Komponente Ce_{0,99}Ba_{0,01}MgAl₁₁O_{18,99} mit einem Schichtgewicht von 1,8 mg/cm². Die "innere", bezüglich des Entladungsmediums zweite Leuchtstoffschicht 4 besteht aus einer Mischung der Rot-Leuchtstoffkomponente (R) Y₂O₂S₂:Eu, der Grün-Leuchtstoffkomponente (G) YBO₃:Ce,Tb und der Blau-Leuchtstoffkomponente (B) BaMgAl₁₀O₁₆:Eu im Gewichtsprozent-Mischungsverhältnis R:G:B=20:60:20. Das Schichtgewicht der zweiten Leuchtstoffschicht 4 beträgt ebenfalls 1,8 mg/cm². Nach 100 Stunden Brenndauer der Lampe 1 war noch keinerlei Farbortabweichung feststellbar, wohingegen eine vergleichbare Lampe mit einer VUV-Dreibanden-Leuchtstoffmischung mit den Leuchtstoffkomponenten YBO₃:Eu, LaPO₄:Ce und BaMgAl₁₀O₁₆:Eu im Gewichtsprozent-Mischungsverhältnis 20:60:20 bereits eine Farbortdrift von Δx/Δy = 0,004/0,004 (nach CIE-Normfarbtafel) aufwies.

Vorstehend wurde die Erfindung zwar am Beispiel einer rohrförmigen Entladungslampe erläutert. Gleichwohl ist die Erfindung nicht auf diesen Lampentyp beschränkt. Vielmehr entfaltet die Erfindung ihre vorteilhafte Wirkung unabhängig von der Form des Entladungsgefäßes. Deshalb sind beispielsweise flächige Lampenformen, wie z.B. in der Schrift US-A 5 994 849 offenbart, genauso geeignet. Außerdem spielt es keine prinzipielle Rolle, ob die Elektroden auf der Außenseite der Entladungsgefäßwand oder alternativ auf der Innenseite angeordnet und mit einer dielektrischen Schicht bedeckt sind. Ebenso können die Elektroden auch völlig unbehindert sein. Ausschlaggebend ist im Zusammenhang mit der eingangs thematisierten Problematik nur, dass das Entladungsmedium im Lampenbetrieb VUV-Strahlung emittiert. Allerdings haben dielektrische Barriere-Entladungslampen diesbezüglich eine gewisse Vorzugsstellung, weil sich damit, wie eingangs bereits erwähnt, in einem speziellen gepulsten Betrieb besonders effizient VUV-Strahlung erzeugen lässt.

## Patentansprüche

1. Entladungslampe (1) mit
• einem Entladungsgefäß (2),
• einem Entladungsmedium, das sich im Innern des Entladungsgefäßes (2) befindet und im Betrieb der Lampe elektromagnetische Strahlung im VUV-Bereich emittiert,
• einem Leuchtstoff, der auf der Wand des Entladungsgefäßes aufgebracht ist, wobei der Leuchtstoff mindestens eine Leuchtstoffkomponente umfasst,
**dadurch gekennzeichnet, dass**
• der Leuchtstoff eine erste Leuchtstoffschicht (5) umfasst, die auf der Innenseite der Wand des Entladungsgefäßes aufgebracht ist und eine durch die VUV-Strahlung anregbare und für die Emission von elektromagnetischer Strahlung im UVA-Bereich vorgesehene UVA-Komponente umfasst,
• der Leuchtstoff eine zweite Leuchtstoffschicht (4) umfasst, die durch die UVA-Strahlung anregbar und für die Emission von elektromagnetischer Strahlung im sichtbaren Bereich vorgesehen ist,
wobei die Reihenfolge der Leuchtstoffschichten (4; 5) so ist, dass vom Entladungsmedium aus betrachtet zuerst die erste Leuchtstoffschicht (5) und danach die zweite Leuchtstoffschicht (4) kommt.

2. Entladungslampe nach Anspruch 1, wobei die zweite Leuchtstoffschicht (4) ebenfalls auf der Innenseite der Wand des Entladungsgefäßes (2) aufgebracht ist und zwar unterhalb der ersten Leuchtstoffschicht (5).

3. Entladungslampe nach Anspruch 1, wobei die zweite Leuchtstoffschicht auf der Außenseite der Wand des Entladungsgefäßes aufgebracht ist.

4. Entladungslampe nach einem der Ansprüche 1 bis 3, mit der UVA-Komponente
Ce_{a-c}Ln_{b}R_{c}Mg_{d}Al₁₁O_{16,5+1,5(a+b)-0,5c+d} ,
wobei
Ln = La, Y, Gd,
R = Ba, Ca, Sr
und
0,10 ≤ a ≤ 1,00;
0 ≤ b ≤ 0,9;
0 ≤ c ≤ 0,5a;
0,45 ≤ d ≤ 2,00;
a+b ≤ 1.

5. Entladungslampe nach einem der Ansprüche 1 bis 3, mit der UVA-Komponente
Ln₁₋ₓCeₓPO₄ ,
wobei
Ln = La, Y, Gd oder Mischungen daraus,
und
0,01 ≤ x ≤ 0,30
bevorzugt
0,02 ≤ x ≤ 0,10.

6. Entladungslampe nach einem der Ansprüche 1 bis 3, mit der UVA-Komponente
Ln₁₋ₓCeₓBO₃,
wobei
Ln = La, Y, Gd oder Mischungen daraus,
und
0,01 ≤ x ≤ 0,20
bevorzugt
0,02 ≤ x ≤ 0,10.

7. Entladungslampe nach einem der vorstehenden Ansprüche, wobei die zweite Leuchtstoffschicht eine Blau- bzw. Blau-grün-Leuchtstoffkomponente umfasst.

8. Entladungslampe nach einem der vorstehenden Ansprüche, mit der
Blau-Leuchtstoffkomponente Sr₅(PO₄)₃Cl:Eu
oder der
Blau-grün-Leuchtstoffkomponente Sr₅(PO₄)₃Cl:Eu,Mn.

9. Entladungslampe nach einem der Ansprüche 1 bis 7, mit der
Blau-Leuchtstoffkomponente BaMgAl₁₀O₁₆:Eu
oder der
Blau-grün-Leuchtstoffkomponente BaMgAl₁₀O₁₆:Eu,Mn.

10. Entladungslampe nach einem der Ansprüche 1 bis 7, mit der
Blau-Leuchtstoffkomponente SrMgAl₁₀O₁₆:Eu
oder der
Blau-grün-Leuchtstoffkomponente SrMgAl₁₀O₁₆:Eu,Mn.

11. Entladungslampe nach einem der Ansprüche 1 bis 7, mit der
Blau-Leuchtstoffkomponente Sr₄Al₁₄O₂₅:Eu
oder der
Blau-grün-Leuchtstoffkomponente Sr₄Al₁₄O₂₅:Eu,Mn.

12. Entladungslampe nach einem der vorstehenden Ansprüche, mit einer Grün-Leuchtstoffkomponente entweder in der zweiten oder ersten Leuchtstoffschicht.

13. Entladungslampe nach Anspruch 12, mit der
Grün-Leuchtstoffkomponente LnBO₃:Ce,Tb ,
wobei
Ln = La, Y, Gd oder Mischungen daraus.

14. Entladungslampe nach Anspruch 12, mit der
Grün-Leuchtstoffkomponente Ln₂SiO₅:Ce,Tb ,
wobei
Ln = La, Y, Gd oder Mischungen daraus.

15. Entladungslampe nach Anspruch 12, mit der
Grün-Leuchtstoffkomponente SrSi₂O₂N₂:Eu .

16. Entladungslampe nach einem der vorstehenden Ansprüche, mit einer Rot-Leuchtstoffkomponente entweder in der ersten oder zweiten Leuchtstoffschicht.

17. Entladungslampe nach Anspruch 16, mit der
Rot-Leuchtstoffkomponente Ln₂O₂S₂:Eu ,
wobei
Ln = La, Y, Gd oder Mischungen daraus.

18. Entladungslampe nach Anspruch 16, mit der
Rot-Leuchtstoffkomponente R₂Si₅N₈:Eu,
wobei R = Ba, Ca, Sr.

19. Entladungslampe nach einem der Ansprüche 7 bis 11, mit einer Gelb-Leuchtstoffkomponente.

20. Entladungslampe nach Anspruch 19, mit der
Gelb-Leuchtstoffkomponente YAG:Ce.

21. Entladungslampe nach Anspruch 19, mit der
Gelb-Leuchtstoffkomponente CaSi₂O₂N₂:Eu²⁺.

22. Entladungslampe nach Anspruch 19, mit der
Gelb-Leuchtstoffkomponente Sr₂Si₅N₈:Ce³⁺.

23. Entladungslampe nach einem der vorstehenden Ansprüche, wobei das Entladungsmedium das Edelgas Xenon umfasst.

24. Entladungslampe nach einem der vorstehenden Ansprüche, die als dielektrische Barrieren-Entladungslampe ausgelegt ist.
